# EUROPEAN PATENT SPECIFICATION

(11) **EP 3 892 174 B1**
(45) Date of publication and mention of the grant of the patent: **20.07.2022**
(21) Application number: 21155331.8
(22) Date of filing: 04.02.2021
(51) Int. Cl.: A47J 45/06, A47J 27/12

(54) **GRIP ELEMENT FOR KITCHEN ITEMS**
GRIFFELEMENT FÜR KÜCHENUTENSILIEN
ÉLÉMENT DE PRÉHENSION POUR ARTICLES DE CUISINE

(30) Priority: 06.04.2020 IT 202000007276
(43) Date of publication of application: 13.10.2021
(73) Proprietor: Brunner S.r.l., 39100 Bolzano (IT)
(72) Inventor: BRUNNER, Roland, 39100 Bolzano BZ (IT)
(74) Representative: Perani & Partners S.p.A.

(56) References cited:
- WO-A1-2013/177066
- CN-U- 203 468 284
- DE-U1-202012 101 757
- US-A1- 2009 218 355
- US-A1- 2009 321 446

## Description

### Technical Field

The present invention relates to a grip element for kitchen items, and to a kitchen item comprising such grip element, and to a system comprising two such kitchen items.

The present invention is used in the field of kitchenware and preferably, though non-exclusively, for moving stackable pots or popote-type pots. Obviously, this does not limit the applicability of the grip element that is the object of the invention, which can be used for moving any kitchen item.

### State of the Art

Kitchen items need to be moved during the various steps of food preparation, for example pots must be able to be placed on and removed from burners.

In the state of the art, handles for pots are known, i.e., suitable grip elements for moving them. Such handles comprise a grip configured to be grasped by a user, and one or more prongs projecting from the grip and linked to the pot.

Grip element comprising a magnet is known from DE-U-202012101757 and WO-A-2013/177066.

Furthermore, kitchen items and in particular those designed for camping, when not used for cooking need to be arranged efficiently, such to occupy as little room as possible.

In this regard, in the state of the art stackable pots or popote-type pots are known, they comprise at least one pair of pots each of which having two handles. Such popote-type pots are configured to be stacked one into the other to reduce space and are kept together by a band linkable to the pot handles when they are not used for cooking.

### Problem of the Prior Art

Disadvantageously the handles known in the prior art are not configured to be linked between each other, this is why popote-type pots need an extensible band linkable to handles to keep them together.

Disadvantageously, such band to fasten pots between each other must be adjusted according to the length and in addition may be accidentally lost.

### Object of the invention

In this context, the technical task underlying the present invention is to provide a grip element for kitchen items which overcomes the drawbacks of the prior art as described above.

In particular, it is the object of the present invention to make available a grip element facilitating the connection between kitchen items, i.e., not requiring the use of further mechanical components in order to perform such connection.

It is further an object of the present invention to provide a grip element capable of reducing space.

### SUMMARY OF THE INVENTION

The mentioned technical task and the specified objects are substantially achieved by a grip element for kitchen items which overcomes the drawbacks of the prior art set forth above.

In particular, such grip element for kitchen items comprises a handle having a grippable portion, i.e., configured to be grasped by a user, and at least one prong projecting from the grippable portion.

The grip portion further comprises a connection element linkable to a kitchen item and to the prong of the handle. In detail, the connection element has a fixing surface configured to be engaged to the kitchen item for moving it.

The connection element further comprises a magnet, i.e., a magnetised body capable to generate a magnetic field and thus to attract ferromagnetic objects arranged in the nearby area.

Advantageously, the grip element object of the present invention can be magnetically linked to other grip elements similar thereto or in general with other ferromagnetic bodies. Therefore, such grip elements, allows not only to move kitchen items but it also allows connecting them.

Advantageously, if the grip element object of the present invention is installed on stackable pots (popote-type pots) it allows to avoid using the extensible band, as it allows to replace the mechanical constraint by means of the magnetic one.

Furthermore, advantageously the handle is constrained in rotation to the connection element, therefore it can commute between an operative configuration wherein the handle projects from the kitchen item to enable the user to grasp it, and a rest configuration wherein the handle is closer to the kitchen item to minimise space.

### LIST OF FIGURES

Further features and advantages of the present invention will become more apparent from the approximate and thus non-limiting description of a preferred, but non-exclusive, embodiment of a grip element for kitchen items, as shown in the accompanying drawings, wherein:
- Figure 1 shows a perspective view of the grip element for kitchen items according to the present invention;
- Figure 2 shows a perspective view of the handle component of the grip element of Figure 1;
- Figure 3 shows a side view of the connection element of the grip element of Figure 1;
- Figure 4 shows a view from above of the connection element of Figure 3;
- Figure 5 shows a section view of the connection element shown in figure 3 and 4 along the section line A-A;
- Figure 6 shows a section view of a kitchen item comprising the grip element shown in Figure 1;
- Figure 7 shows a side view of a system for combining two kitchen items shown in Figure 6;
- Figure 8 shows a perspective view of a system for combining two kitchen items shown in Figure 7;

### DETAILED DESCRIPTION

Even when not explicitly highlighted, the individual features described with reference to the specific embodiments must be considered as accessories and/or exchangeable with other features, described with reference to other embodiments.

Referring to the enclosed figures, the object of the present invention is a grip element 1 for kitchen items.

Such grip element 1 was specifically designed for moving stackable pots or popote-type pots, a particular type of pots specifically designed to reduce space thereof and for this reason commonly used for camping. Obviously, this does not limit the applicability of the grip element 1, which can be used for moving any kitchen item.

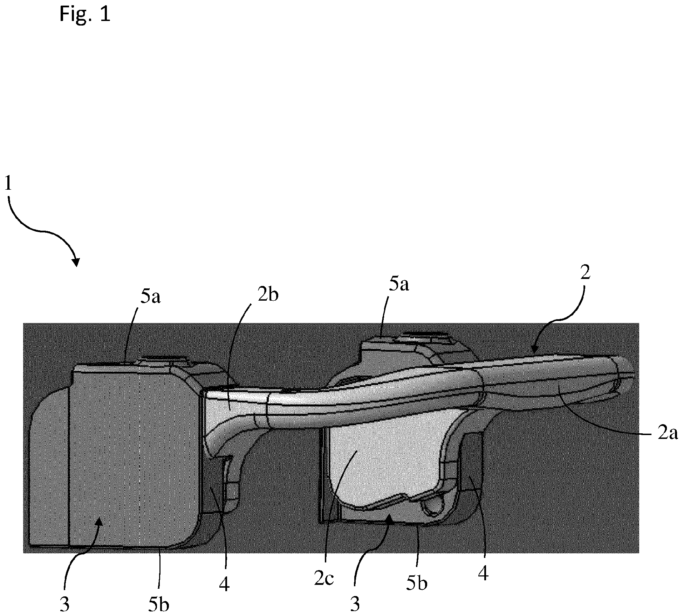

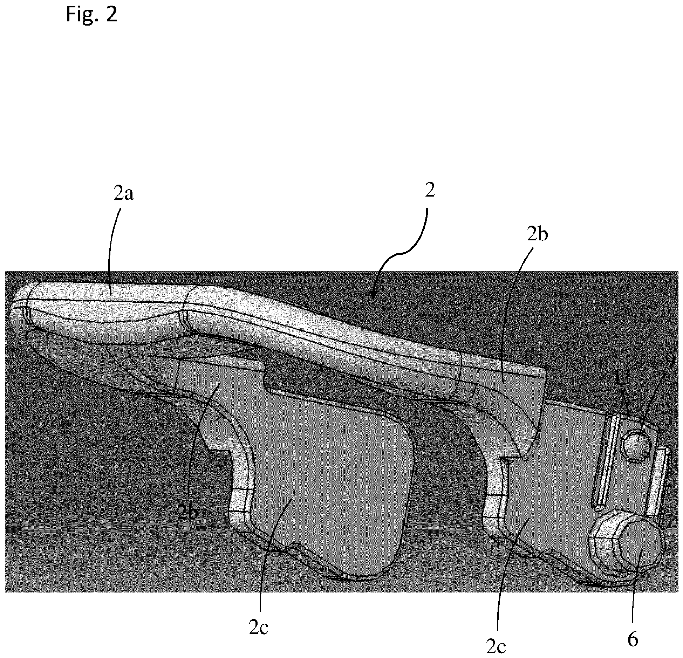

Referring in particular to figures 1 and 2, the grip element 1 comprises a handle 2 having a grippable portion 2a and at least a prong 2b projecting from the grippable portion 2a. In detail, the grippable portion 2a extends mainly along a first longitudinal direction X-X for a tract having a length comparable with the dimensions of a user's hand; the prong 2b, extends along a direction transverse to the first longitudinal direction X-X.

Preferably, the prongs 2b are two and are arranged at opposite parts of the grippable portion 2a and extend along a direction which is substantially perpendicular to the first longitudinal direction X-X.

In a preferable embodiment, each prong 2b has a substantially flat end 2c, similar to a plate, facing each other.

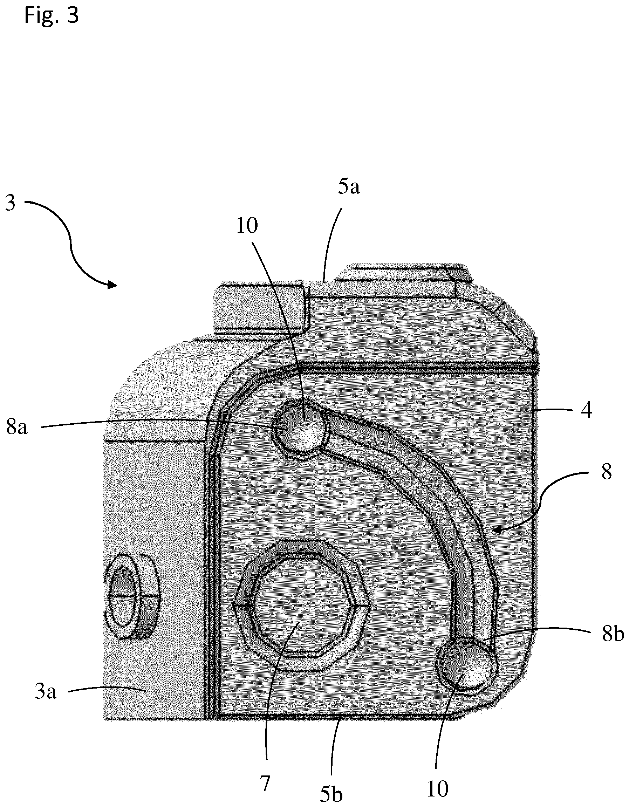

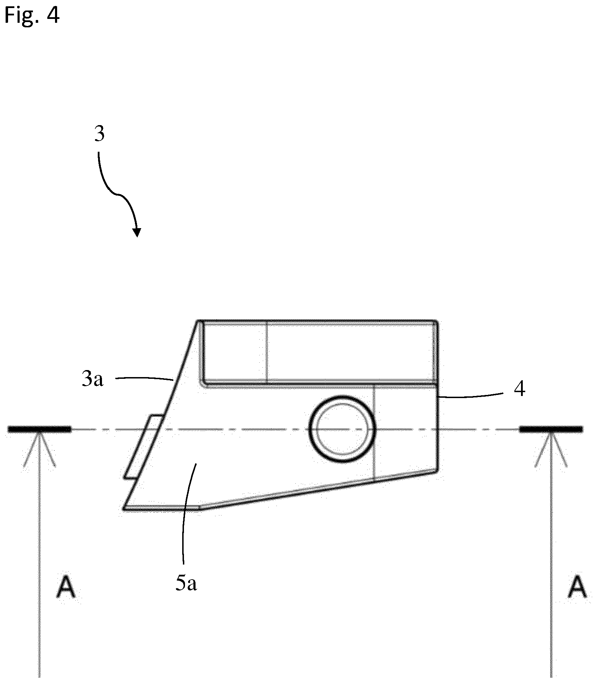

The grip element 1 further comprises a connection element 3 shown in figures 3 to 5. Such connection element 3 is configured to be linked to the kitchen item and to the prong 2a by means of the end 2c. In detail, the connection element 3 has a fixing surface 3a linkable to the kitchen item.

Preferably, the connection element 3 further has a wall 4 opposite to the fixing surface 3a; an upper surface 5a and a lower surface 5b.

The connection element 3 comprises a magnet 3b, i.e., a magnetised body able to generate a magnetic field and thus to attract ferromagnetic objects arranged in the nearby area.

In a preferable embodiment, the connection element 3 comprises a seat 3c configured to house the magnet 3b therein.

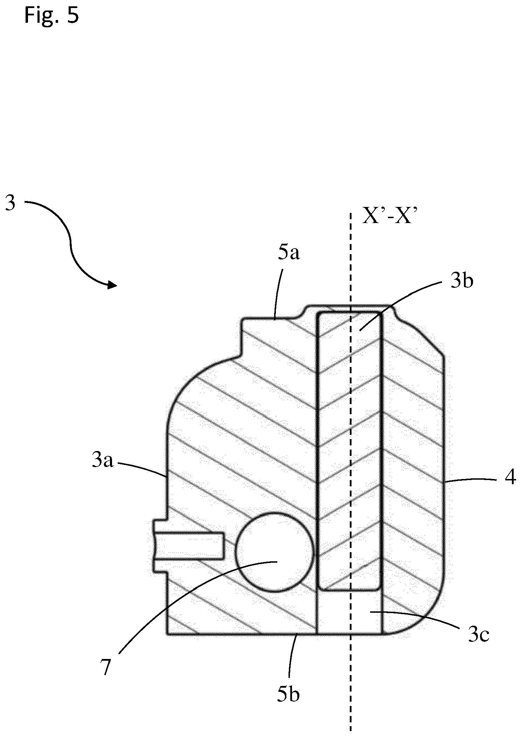

Referring in particular to the section view shown in figure 5, the seat 3c extends into the connection element 3 from the lower surface 5b up to near the upper surface 5a to allow the insertion of the magnet 3b and lock it near the upper wall 5a.

Preferably, the seat 3c extends in the connection element along a second longitudinal direction X'-X' substantially oriented perpendicular to the upper surface 5a.

In a preferable embodiment, the handle 2 comprises two prongs 2b each of which is linked to a respective connection element 3 by means of the end 2c. In detail, preferably the connection elements 3 are arranged symmetrically with respect to the grippable portion 2a, so as to divide equally on the two prongs 2b the force exerted by the user to move the kitchen item with which the grip element 1 is engaged.

Preferably, the handle 2 moves with a relative motion with respect to the connection element 3 to switch the grip element 1 between an operating configuration in which the handle 2 lies in a plane substantially parallel to the upper wall 5a and a rest configuration, in which the handle 2 lies in a plane transverse to the upper wall 5a. In other words, the handle 2 and the connection element 3 are configured to be linked in rotation with each other, to switch the grip element 1 between the operating and rest configuration.

In order to allow switching between the two configurations the prong 2 comprises a pin 6, and the connection element 3 comprises a hole 7 configured to house therein the pin 6 when the handle 2 is linked to the connection element 3. Referring to figure 2, the pin 6 extends along a direction parallel to the first longitudinal direction X-X. Preferably, the hole 7 is blind and extends into the connection element 3 perpendicularly to the second longitudinal direction X'-X', as shown in figure 5.

The pin 6 rotating in the corresponding hole 7 allows the handle 2 to rotate relative to the connection element 3 to switch the grip element 1 between the operating and rest configuration.

In a preferable embodiment, the connection element 3 comprises a guide 8 extending between an upper end 8a and a lower end 8b, as shown in figure 3. Preferably the prong 2b of the handle 2 comprises a slider 9 configured to slide into the guide 8, as shown in figure 2.

When the handle 2 is linked to the connection element 3, the slider 9 is at least partially inserted in the guide 8 and sliding therein allows to switch the grip element 1 between the operating and rest position.

The slider 9 in the operating configuration is located at the upper end 8a of the guide, whereas in the rest configuration it is located at the lower end 8b of the guide 8.

Referring in particular to figure 3, the guide 8 has a groove 10 near the upper and lower ends 8a, 8b. The groove 10 is geometrically complimentary to the slider 9 and is configured to lock the slider 9 therein. The grooves 10 thus have the function to lock the grip element 1 in the operating or rest configuration to avoid changing configuration involuntarily. Specifically, if the slider 9 is in the groove 10 at the upper end 8a the grip element 1 is locked in the operating configuration, whereas if the slider 9 is in the groove 10 at the lower end 8b the grip element 1 is locked in the rest configuration.

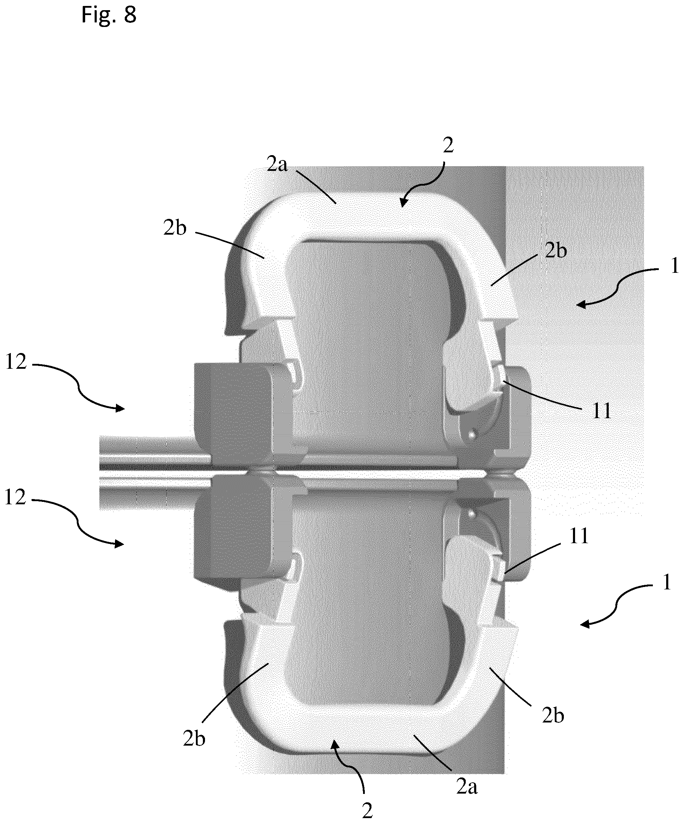

Preferably, the grip element 1 has a lock mechanism configured to allow extracting the slider 9 from the grooves 10 and therefore enable the relative rotation between the handle 2 and the connection element 3. In detail, as shown in figures 2 and 8, the handle 2 comprises a protuberance 11 connected to the slider 9 and configured to move it in a direction substantially parallel to the first longitudinal direction X-X, i.e., configured to move the slider 9 along a direction which allows to be extracted from the grooves 10. More in detail, the protuberance 11 extends perpendicularly to the plane in which the handle 2 lies and is actuatable by the user.

A kitchen item 12 comprising at least a grip element 1 to allow movement thereof is also part of the invention. In detail, the kitchen item 12 has a bottom 12a linked to a side wall 12b to define a volume 12c accessible from above through an opening 12d.

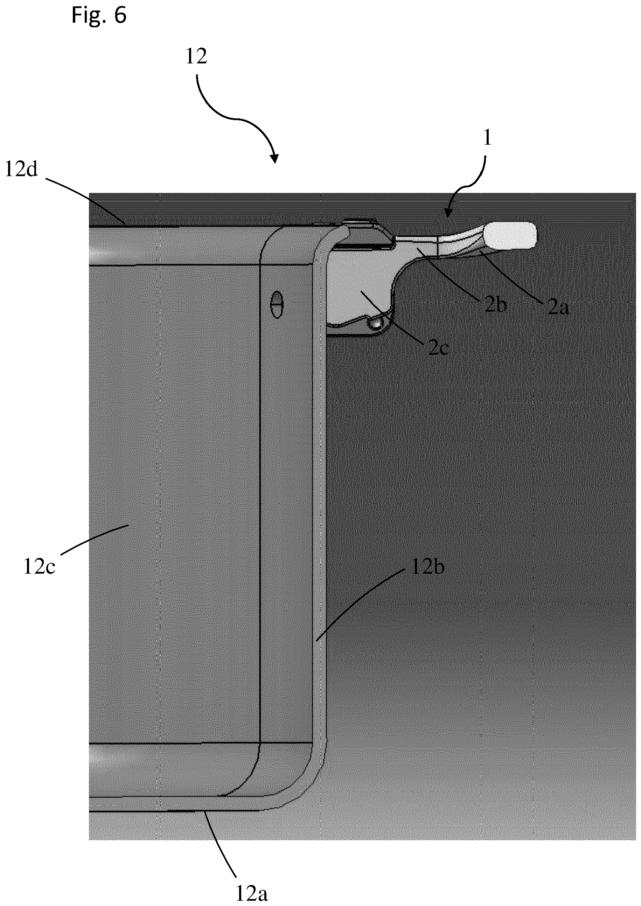

The grip element 1 is linkable to the side wall 12b by means of the fixing surface 3a. Preferably, as shown in figure 6, the grip element is placed at the opening 12d so that the magnet extending along the second longitudinal direction X'-X' is arranged perpendicularly to the plane containing the opening 12d.

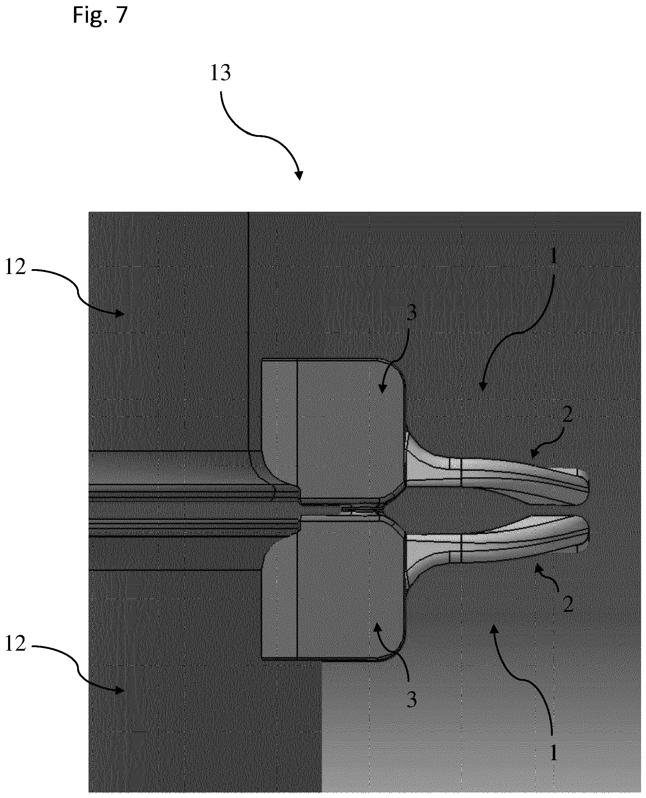

A system 13 for combining two kitchen items 12 wherein the two kitchen items 12 are arranged symmetrically with the relative openings 12d facing each other and with the grip elements 1 in correspondence so as to be magnetically connected, as shown in figure 7 and 8, is also part of the invention.

In particular, in figure 7 it can be noted that in the operating condition the handles 2 are projecting from the kitchen items 12, whereas in figure 8 it can be noted that in the rest condition the handles 2 are closer to the kitchen items 12.

## Claims

1. Grip element (1) for kitchen items comprising:
- a handle (2) having a grippable portion (2a) extending mainly along a first longitudinal direction (X-X); and at least one prong (2b), projecting from the grippable portion (2a), extending along a direction transverse to the first longitudinal direction (X-X);
- at least one connection element (3) linkable to the prong (2b) of the handle (2), and having a fixing surface (3a) configured to be hookable to a kitchen item;
**characterized in that** the connection element (3) comprises a magnet (3b).

2. Grip element (1) according to claim 1, wherein the connection element (3) comprises a seat (3c) configured to house the magnet (3b) at its inside.

3. Grip element (1) according to claim 2, wherein the connection element (3) comprises a wall (4) opposite the fixing surface (3a), an upper wall (5a) and a lower wall (5b), the seat (3c) extending in the connection element (3) from the lower surface (5b) up to near the upper surface (5a) along a second longitudinal direction (X'-X') substantially perpendicular to the upper surface (5a) to allow the insertion of the magnet (3b).

4. Grip element (1) according to any one of the preceding claims, wherein the handle (2) comprises two prongs (2b) arranged on opposite sides of the grippable portion (2a) and each of which can be linked to a respective connection element (3).

5. Grip element (1) according to any one of the preceding claims, wherein the handle (2) moves with a relative motion with respect to the connection element (3) for switching the grip element (1) between an operating configuration in which the handle (2) lies in a plane substantially parallel to the upper wall (5a) and a rest configuration, in which the handle (2) lies in a plane transverse to the upper wall (5a).

6. Grip element (1) according to claim 5, wherein:
- the prong (2b) of the handle (2) comprises a pin (6) extending along a direction parallel to the first longitudinal direction (X-X);
- the connection element (3) comprises a hole (7) configured to house said pin (6) at its inside; such a pin (6) being free to rotate within the hole (7) to allow the handle (2) to rotate with respect to the connection element (3) for switching the grip element (1) between the operating and rest configuration.

7. Grip element (1) according to claims 5 or 6, wherein:
- the connection element (3) comprises a guide (8) having an upper end (8a) and a lower end (8b);
- the prong (2b) of the handle (2) comprises a slider (9) configured to slide in the guide (8), the slider (9) in the operating configuration being located at the upper end (8a) of the guide (8), whereas in the rest configuration the slider (9) is located at the lower end (8b) of the guide (8).

8. Grip element (1) according to claim 7, wherein
- the guide (8) near the upper and lower ends (8a, 8b) has a groove (10) configured to house the slider (9) at its inside, to lock the grip element (1) in the operating or rest configuration;
- the slider (9) is linked to a protuberance (11) which extends perpendicularly to the plane where the handle (2) lies, the protuberance (11) being configured to move the slider (9) in a direction substantially parallel to the first longitudinal direction (X-X) to allow the slider (9) to be extracted from the grooves (10) and then to unlock the relative movement of the handle (2) with respect to the connection element (3).

9. Kitchen item (12) having a bottom (12a) and a side wall (12b), the bottom (12a) being linked to the side wall (12b) to define a volume (12c) accessible from above through an opening (12d), **characterized in that** it comprises at least one grip element (1) according to any one of the preceding claims to allow its handling, the grip element (1) being linkable to the side wall (12b) by means of the fixing surface (3a).

10. System (13) comprising two kitchen items (12) according to claim 9, **characterized in that** the two kitchen items are arranged symmetrically with the relative openings (12d)facing each other and with the grip elements (1) in correspondence so that the grip elements are magnetically connected.

## Patentansprüche

1. Griffelement (1) für Küchenartikel, umfassend:
- einen Griff (2) mit einem greifbaren Abschnitt (2a), der sich hauptsächlich entlang einer ersten Längsrichtung (X-X) erstreckt; und mindestens einen Zinken (2b), der von dem greifbaren Abschnitt (2a) vorsteht und sich entlang einer Richtung quer zu der ersten Längsrichtung (X-X) erstreckt;
- mindestens ein Verbindungselement (3), das mit dem Zapfen (2b) des Griffs (2) verbunden werden kann und eine Befestigungsfläche (3a) aufweist, die so gestaltet ist, dass sie an einem Küchenartikel eingehakt werden kann;
**dadurch gekennzeichnet, dass** das Verbindungselement (3) einen Magneten (3b) umfasst.

2. Griffelement (1) nach Anspruch 1, wobei das Verbindungselement (3) einen Sitz (3c) umfasst, der so gestaltet ist, dass er den Magneten (3b) an seiner Innenseite aufnimmt.

3. Griffelement (1) nach Anspruch 2, wobei das Verbindungselement (3) eine der Befestigungsfläche (3a) gegenüberliegende Wand (4), eine obere Wand (5a) und eine untere Wand (5b) aufweist, wobei sich der Sitz (3c) in dem Verbindungselement (3) von der unteren Fläche (5b) bis in die Nähe der oberen Fläche (5a) entlang einer zweiten Längsrichtung (X'-X') im Wesentlichen senkrecht zu der oberen Fläche (5a) erstreckt, um das Einsetzen des Magneten (3b) zu ermöglichen.

4. Griffelement (1) nach einem der vorstehenden Ansprüche, wobei der Griff (2) zwei auf gegenüberliegenden Seiten des greifbaren Abschnitts (2a) angeordnete Zinken (2b) umfasst, die jeweils mit einem Verbindungselement (3) verbunden werden können.

5. Griffelement (1) nach einem der vorstehenden Ansprüche, wobei der Griff (2) mit einer Relativbewegung in Bezug auf das Verbindungselement (3) bewegt wird, um das Griffelement (1) zwischen einer Betriebskonfiguration, in der der Griff (2) in einer Ebene im Wesentlichen parallel zu der oberen Wand (5a) liegt, und einer Ruhekonfiguration, in der der Griff (2) in einer Ebene quer zu der oberen Wand (5a) liegt, umzuschalten.

6. Griffelement (1) nach Anspruch 5, wobei:
- der Zinken (2b) des Griffs (2) einen Stift (6) umfasst, der sich in einer Richtung parallel zur ersten Längsrichtung (X-X) erstreckt;
- das Verbindungselement (3) ein Loch (7) umfasst, das so gestaltet ist, dass es den Stift (6) an seiner Innenseite aufnimmt; wobei ein solcher Stift (6) in dem Loch (7) frei drehbar ist, um es dem Griff (2) zu ermöglichen, sich in Bezug auf das Verbindungselement (3) zu drehen, um das Griffelement (1) zwischen der Betriebs-und der Ruhekonfiguration umzuschalten.

7. Griffelement (1) nach Anspruch 5 oder 6, wobei:
- das Verbindungselement (3) eine Führung (8) mit einem oberen Ende (8a) und einem unteren Ende (8b) umfasst;
- der Zinken (2b) des Griffs (2) einen Schieber (9) umfasst, der so gestaltet ist, dass er in der Führung (8) gleitet, wobei sich der Schieber (9) in der Betriebskonfiguration am oberen Ende (8a) der Führung (8) befindet, während sich der Schieber (9) in der Ruhekonfiguration am unteren Ende (8b) der Führung (8) befindet.

8. Griffelement (1) nach Anspruch 7, wobei
- die Führung (8) in der Nähe der oberen und unteren Enden (8a, 8b) eine Nut (10) aufweist, die so gestaltet ist, dass sie den Schieber (9) an ihrer Innenseite aufnimmt, um das Griffelement (1) in der Betriebs- oder Ruhekonfiguration zu verriegeln;
- der Schieber (9) mit einem Vorsprung (11) verbunden ist, der sich senkrecht zu der Ebene erstreckt, in der der Griff (2) liegt, wobei der Vorsprung (11) so gestaltet ist, dass er den Schieber (9) in eine Richtung verschiebt, die im Wesentlichen parallel zu der ersten Längsrichtung (X-X) verläuft, um das Herausziehen des Schiebers (9) aus den Nuten (10) zu ermöglichen und dann die relative Bewegung des Griffs (2) in Bezug auf das Verbindungselement (3) zu entriegeln.

9. Küchenartikel (12) mit einem Boden (12a) und einer Seitenwand (12b), wobei der Boden (12a) mit der Seitenwand (12b) verbunden ist, um ein Volumen (12c) zu definieren, das von oben durch eine Öffnung (12d) zugänglich ist, **dadurch gekennzeichnet, dass** er mindestens ein Griffelement (1) nach einem der vorstehenden Ansprüche umfasst, um seine Handhabung zu ermöglichen, wobei das Griffelement (1) mittels der Befestigungsfläche (3a) mit der Seitenwand (12b) verbunden werden kann.

10. System (13), umfassend zwei Küchenartikel (12) nach Anspruch 9,
**dadurch gekennzeichnet, dass** die zwei Küchenartikel symmetrisch angeordnet sind, wobei die entsprechenden Öffnungen (12d) einander gegenüberliegen und die Griffelemente (1) in Übereinstimmung sind, so dass die Griffelemente magnetisch verbunden sind.

## Revendications

1. Élément de préhension (1) pour articles de cuisine comprenant :
- une poignée (2) ayant une partie saisissable (2a) s'étendant principalement le long d'une première direction longitudinale (X-X) ; et au moins une dent (2b), faisant saillie de la partie saisissable (2a), s'étendant le long d'une direction transversale à la première direction longitudinale (X-X) ;
- au moins un élément de connexion (3) pouvant être relié à la dent (2b) de la poignée (2), et ayant une surface de fixation (3a) configurée pour pouvoir être accrochée à un article de cuisine ;
**caractérisé en ce que** l'élément de connexion (3) comprend un aimant (3b).

2. Élément de préhension (1) selon la revendication 1, dans lequel l'élément de connexion (3) comprend un siège (3c) configuré pour loger l'aimant (3b) à son intérieur.

3. Élément de préhension (1) selon la revendication 2, dans lequel l'élément de connexion (3) comprend une paroi (4) opposée à la surface de fixation (3a), une paroi supérieure (5a) et une paroi inférieure (5b), le siège (3c) s'étendant dans l'élément de connexion (3) depuis la surface inférieure (5b) jusqu'à proximité de la surface supérieure (5a) le long d'une seconde direction longitudinale (X'-X') sensiblement perpendiculaire à la surface supérieure (5a) pour permettre l'insertion de l'aimant (3b).

4. Élément de préhension (1) selon l'une quelconque des revendications précédentes, dans lequel la poignée (2) comprend deux dents (2b) disposées sur des côtés opposés de la partie saisissable (2a) et dont chacune peut être reliée à un élément de connexion (3) respectif.

5. Élément de préhension (1) selon l'une quelconque des revendications précédentes, dans lequel la poignée (2) se déplace selon un mouvement relatif par rapport à l'élément de connexion (3) pour commuter l'élément de préhension (1) entre une configuration de fonctionnement dans laquelle la poignée (2) se trouve dans un plan sensiblement parallèle à la paroi supérieure (5a) et une configuration de repos, dans laquelle la poignée (2) se trouve dans un plan transversal à la paroi supérieure (5a).

6. Élément de préhension (1) selon la revendication 5, dans lequel :
- la dent (2b) de la poignée (2) comprend une broche (6) s'étendant le long d'une direction parallèle à la première direction longitudinale (X-X) ;
- l'élément de connexion (3) comprend un orifice (7) configuré pour loger ladite broche (6) à son intérieur ; une telle broche (6) étant libre de tourner à l'intérieur de l'orifice (7) pour permettre à la poignée (2) de tourner par rapport à l'élément de connexion (3) pour commuter l'élément de préhension (1) entre la configuration de fonctionnement et celle de repos.

7. Élément de préhension (1) selon les revendications 5 ou 6, dans lequel :
- l'élément de connexion (3) comprend un guide (8) ayant une extrémité supérieure (8a) et une extrémité inférieure (8b) ;
- la dent (2b) de la poignée (2) comprend une glissière (9) configurée pour coulisser dans le guide (8), la glissière (9) dans la configuration de fonctionnement étant située au niveau de l'extrémité supérieure (8a) du guide (8), tandis que dans la configuration de repos la glissière (9) est située au niveau de l'extrémité inférieure (8b) du guide (8).

8. Élément de préhension (1) selon la revendication 7, dans lequel
- le guide (8) à proximité des extrémités supérieure et inférieure (8a, 8b) présente une rainure (10) configurée pour loger la glissière (9) à son intérieur, pour bloquer l'élément de préhension (1) dans la configuration de fonctionnement ou celle de repos ;
- la glissière (9) est reliée à une saillie (11) qui s'étend perpendiculairement au plan où se trouve la poignée (2), la saillie (11) étant configurée pour déplacer la glissière (9) dans une direction sensiblement parallèle à la première direction longitudinale (X-X) pour permettre à la glissière (9) d'être extraite des rainures (10) et puis de déverrouiller le mouvement relatif de la poignée (2) par rapport à l'élément de connexion (3).

9. Article de cuisine (12) ayant un fond (12a) et une paroi latérale (12b), le fond (12a) étant relié à la paroi latérale (12b) pour définir un volume (12c) accessible par le haut à travers une ouverture (12d), **caractérisé en ce qu'il** comprend au moins un élément de préhension (1) selon l'une quelconque des revendications précédentes pour permettre sa manipulation, l'élément de préhension (1) pouvant être relié à la paroi latérale (12b) par l'intermédiaire de la surface de fixation (3a).

10. Système (13) comprenant deux articles de cuisine (12) selon la revendication 9, **caractérisé en ce que** les deux articles de cuisine sont disposés symétriquement avec les ouvertures (12d) relatives se faisant face et avec les éléments de préhension (1) en correspondance de sorte que les éléments de préhension soient connectés magnétiquement.
